# EUROPEAN PATENT SPECIFICATION

(11) **EP 3 006 275 B1**
(45) Date of publication and mention of the grant of the patent: **05.12.2018**
(21) Application number: 14804649.3
(22) Date of filing: 17.03.2014
(51) Int. Cl.: B60R 21/217, B60R 21/205

(54) **AIRBAG DEVICE**
AIRBAGVORRICHTUNG
DISPOSITIF DE COUSSIN DE SECURITE GONFLABLE

(30) Priority: 31.05.2013 JP 2013116222
(43) Date of publication of application: 13.04.2016
(73) Proprietor: Autoliv Development AB, 447 83 Vårgårda (SE)
(72) Inventor: KOYAMA, Hitoshi, Yokohama-shi, Kanagawa 222-8580 (JP); AHMAD, Hafizi, Yokohama-shi, Kanagawa 222-8580 (JP)
(74) Representative: Müller Verweyen
(86) International application number: PCT/JP2014/057048
(87) International publication number: WO 2014/192374

(56) References cited:
- EP-A2- 1 172 263
- WO-A1-2009/008221
- WO-A1-2009/008221
- JP-A- 2000 233 703
- JP-A- 2009 248 910
- US-B1- 6 299 202

## Description

### BACKGROUND OF THE INVENTION

### 1. Field of the Invention

The present invention relates to an airbag apparatus that restrains an occupant in a vehicle, and particularly relates to the structure of a housing that houses an airbag.

### 2. Description of the Related Art

Examples of airbag apparatuses include a driver seat airbag apparatus housed in a central portion of a steering wheel, an occupant seat airbag apparatus housed in an instrument panel (dashboard), a curtain airbag apparatus that is deployed from the vicinity of a roof rail so as to cover a window, and a side airbag apparatus incorporated in a seat. The airbag apparatus is intended to absorb and relax impact at the time of a collision to protect an occupant from the impact. An airbag apparatus corresponding to the preamble of claim 1 is known from WO 2009/008221 A1.

The airbag apparatus needs to regulate a direction in which the airbag is deployed, according an environment where the airbag apparatus is installed. However, appropriately controlling the deployment direction of the airbag using a simple structure and low costs is difficult.

For example, the occupant seat airbag apparatus is housed inside the instrument panel and configured to allow the airbag to be deployed upward from a fragile area (slit) formed in the instrument panel. The fragile area in the instrument panel that is opened when the airbag apparatus is actuated is, for example, H-shaped. An upper portion and a lower portion of the fragile area with respect to the central transverse line thereof are opened like a double door so as to allow the airbag to be deployed toward a vehicle interior. However, when the deployment direction is inappropriate, for example, a portion (front door) of the instrument panel closer to the windshield may be broken and shattered.

### SUMMARY OF THE INVENTION

With the above-described situation in view, it is an object of the present invention to provide an airbag apparatus that enables a deployment direction of an airbag to be effectively regulated in spite of the simple structure of the apparatus.

To accomplish this object, an airbag apparatus according to claim 1 is proposed.

Preferably, the first flap extends into the housing area so as to cover from an upper surface to a side surface of the airbag that has been folded, and an end of the first flap reaches a bottom of the housing area. Adoption of such a structure increases friction between an outer surface of an end area of the first flap and an inner surface of the second flap to enable deployment of the airbag to be more effectively regulated.

As the regulation member, a triangular regulation cloth which fans out from the second opening edge toward the first opening edge may be adopted. Thus, sewing can be adopted as fixation means to allow the structure of the regulation means to be simplified. As a result, costs are reduced.

The airbag apparatus can be applied to an occupant seat airbag apparatus installed inside an instrument panel. A fragile area that is ruptured when the apparatus is actuated is formed in the instrument panel. Preferably, the first opening edge is positioned closer to the occupant, and the second opening edge is positioned closer to a windshield. In such a case, deployment of the airbag is restrained from progressing toward the windshield and guided toward the occupant. This enables avoidance of a situation where a door of the instrument panel that is closer to the windshield is broken and shattered.

### BRIEF DESCRIPTION OF THE DRAWINGS

FIG. 1 is a perspective view depicting a fabric housing used for an airbag apparatus according to an embodiment of the present invention;
FIG. 2 is a sectional view depicting a structure of the airbag apparatus according to the embodiment;
FIG. 3A is a top view depicting a fabric housing used for the airbag apparatus according to the embodiment, and FIG. 3B is a plan view depicting an instrument panel in which the airbag apparatus according to the embodiment is installed;
FIG. 4 is a diagram (sectional view) illustrating a positional relation between a windshield and the instrument panel in which the airbag apparatus according to the embodiment is installed;
FIG. 5A is sectional view depicting an initial state of actuation of the airbag apparatus according to the embodiment, and FIG. 5B is a sectional view depicting a state following the state in FIG. 5A; and
FIG. 6 is a sectional view depicting a state of actuation of the airbag apparatus according to the embodiment following the state in FIG. 5B.

### DESCRIPTION OF THE PREFERRED EMBODIMENTS

With reference to the attached drawings, a preferred embodiment of the present invention will be described below taking an occupant seat airbag apparatus as an example. In the specification and the drawings, elements having substantially the same functions and configurations are denoted by the same reference numerals, and duplicate descriptions of these elements are omitted. Elements that are not directly related to the present invention are not depicted in the drawings.

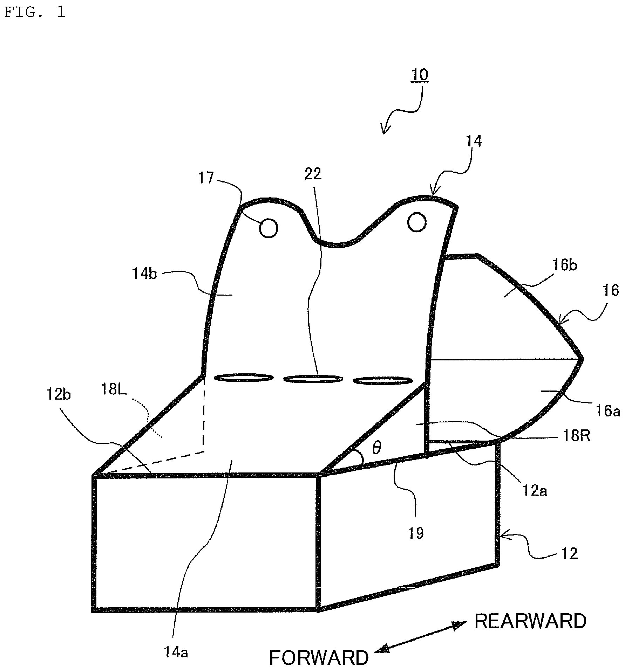

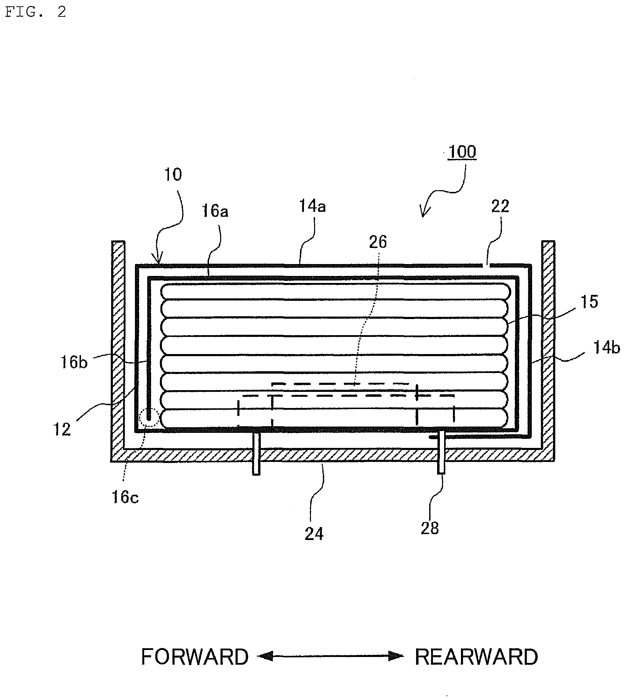

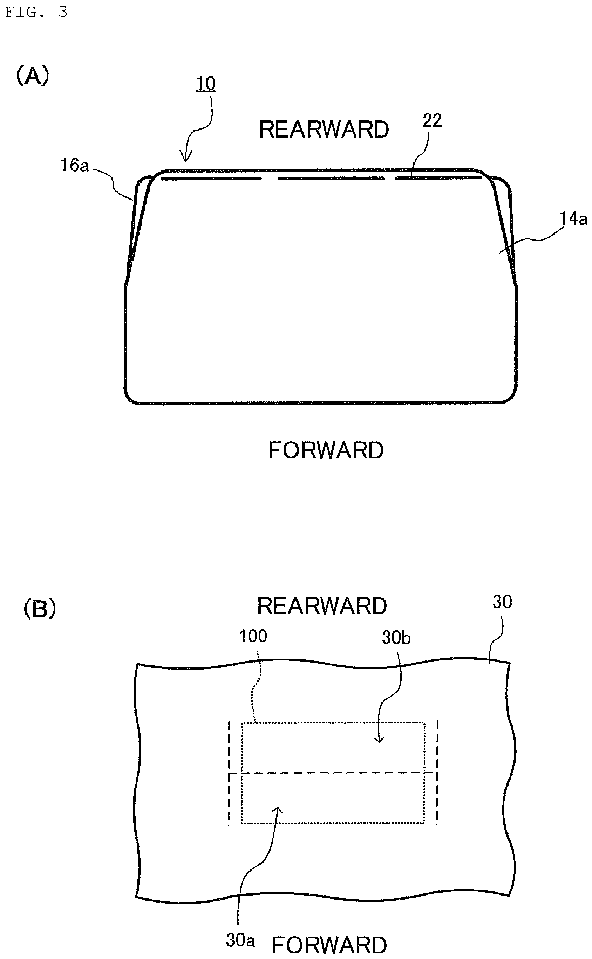

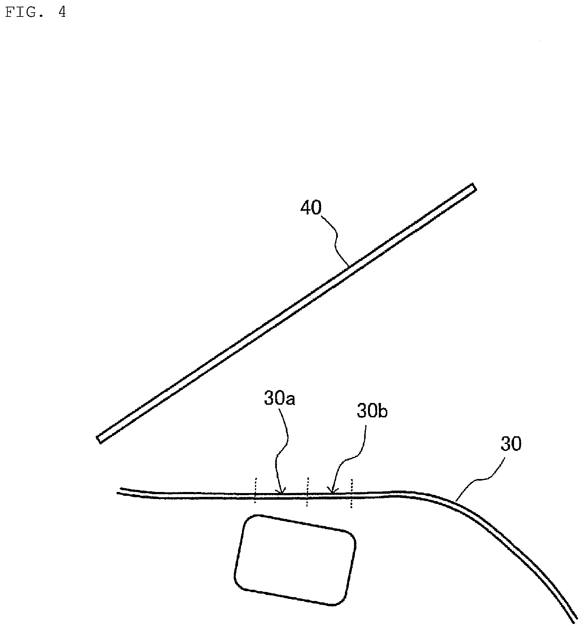

FIG. 1 is a perspective view depicting a fabric housing 10 used for an airbag apparatus 100 according to an embodiment of the present invention. FIG. 2 is a sectional view depicting the structure of the airbag apparatus 100. FIG. 3A is a top view depicting the fabric housing 10. FIG. 3B is a plan view depicting an instrument panel 30 in which the airbag apparatus according to the embodiment is installed. FIG. 4 illustrates a positional relation between the instrument panel and a windshield. In the drawings, "forward" means a forward direction in a vehicle and corresponds to the side of the instrument panel closer to the windshield. "Rearward" means a rearward direction in the vehicle and corresponds to the side of the instrument panel closer to a vehicle interior.

The airbag apparatus 100 according to the present embodiment includes an airbag 15 that is inflated and deployed to restrain an occupant, an inflator 26 that supplies inflation gas to the airbag 15, and a fabric housing 10 that houses the airbag 15 and the inflator 26. The housing 10 has a housing area 12 shaped generally like a box to house the folded airbag 15 and inflator 26, a first flap 16, and a second flap 14. The housing area 12 has a first opening edge 12a and a second opening edge 12b facing the first opening edge 12a. The first flap 16 is coupled to the first opening edge 12a of the housing area 12 and extends from the first opening edge 12a toward the second opening edge 12b to cover the airbag 15. The second flap 14 is coupled to the second opening edge 12b of the housing area 12 and arranged to extend from the second opening edge 12b toward the first opening edge 12a to overhang the first flap 16. The housing area 12 and the first and second flaps are integrally formed of the same fabric.

As depicted in FIG. 2, the first flap 16 includes an area 16a that covers an upper surface of the folded airbag 15, an area 16b that covers a front side surface of the airbag 15, and a tip 16c of the area 16b. On the other hand, the second flap 14 includes an area 14a that overhangs the first flap 16a covering an upper surface of the folded airbag 15 and an area 14b extending so as to wrap an outer side surface of the housing area 12. An end (edge) of the area 14b reaches a bottom of the housing area 12. Holes 17 penetrated by stud bolts 28 coupled to a retainer to which the inflator 26 is fixed are formed at end of the second flap 14 at two positions. The fabric housing 10 is housed inside a steel housing 24.

The second flap 14 includes, on the side surfaces thereof, regulation members 18R and 18L that regulates the amount of opening of the flap. The "side surfaces" as used herein correspond to two sides substantially orthogonal to the first opening edge 12a and the second opening edge 12b and correspond to a plane parallel to a direction from the front to rear of the housing area 12. The regulation members 18R and 18L are regulation cloths coupled to the side surfaces of the second flap 14 and the opening edge of the housing area. The regulation members 18R and 18L each have a triangular shape fanning out from the second opening edge 12b toward the first opening edge 12a. An angle θ in FIG. 1 can be set as needed according to a deployment regulation direction of the airbag 15 and is preferably 30° to 60°. Normally, an angle θ of 30° or smaller may regulate the deployment of the airbag 15 more strictly than needed, leading to a delay in deployment. In contrast, an angle θ of 60° or larger may make the regulation of the deployment direction less effective. The regulation cloths 18R and 18L are configured such that, for example, a base portion 19 of the triangle is sewn to the housing area 12.

As depicted in FIGS. 1, 2, and 3A, at a boundary portion between the areas 14a and 14b of the second flap 14, slits 22 are formed which serve as fragile portions that are broken when the airbag apparatus 100 is actuated. When inflation gas is output from the inflator 26, the second flap 14 is broken at the slits 22 to open the first and second flaps 16 and 14, permitting the airbag 15 to be inflated and deployed.

As depicted in FIG. 3B, an H-shaped fragile area is formed in the upper part of the airbag apparatus 100 so as to form window portions 30a and 30b. When the airbag apparatus 100 is actuated, the window portions 30a and 30b are opened like a double door by the pressure of the airbag 15, to deploy the airbag 15 toward the vehicle interior. The present embodiment can prevent the side of the instrument panel 30 closer to a windshield 40 (see FIG. 4), that is, the front window portion 30a, from being broken and shattered by the pressure of the airbag 15.

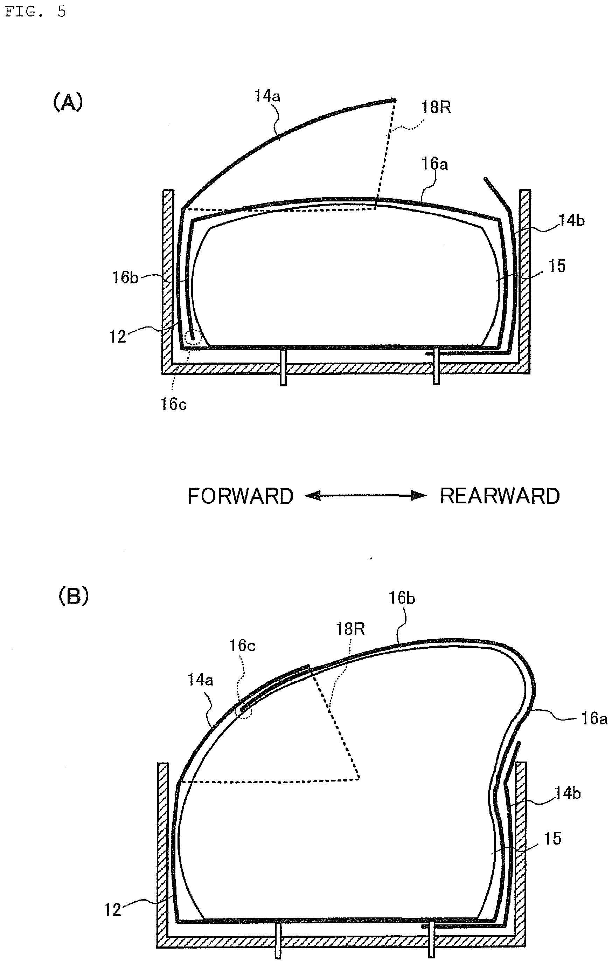

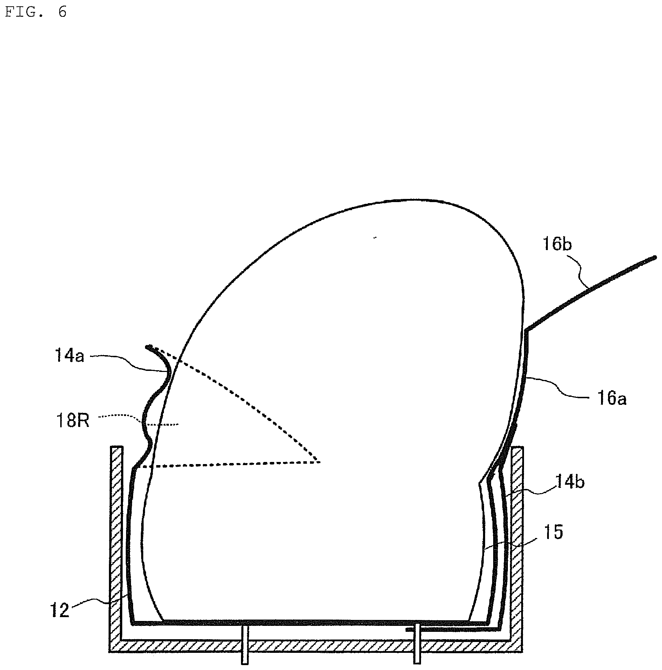

Now, with reference to FIGS. 5A, 5B, and 6, operations and effects of the present invention will be described. When a collision of the vehicle occurs to actuate the airbag apparatus 100, gas supplied by the inflator 26 causes the airbag 15 to start to be inflated. At an initial stage, the second flap 14 of the fabric housing 10 is broken and separated from the slits 22 as depicted in FIG. 5A. At this time, the regulation members 18R and 18L regulate opening of the second flap 14 toward the windshield 40 (forward). In addition, since the tip 16c of the first flap 16 extends to the bottom of the housing area 12, higher friction occurs between an outer surface of the end area 16b of the first flap 16 and an inner surface of the area 14a of the second flap 14. Thus, the deployment of the airbag 15 toward the windshield 40 is effectively regulated to enable the airbag 15 to be guided toward the occupant (FIG. 5B). As further inflated, the airbag 15 is deployed as is the case with the related art, as depicted in FIG. 6.

In the present embodiment, since the regulation members 18R and 18L of the second flap 14 are adopted and the tip 16c of the first flap 16 is inserted deep into the housing area 12 to the vicinity of the bottom thereof, the deployment of the airbag 15 can be guided toward the occupant at the initial stage, as described above. This enables avoidance of a situation where the front window portion 30a of the instrument panel 30 is broken and shattered. The present invention is a concept that allows the deployment direction of the airbag to be effectively regulated at the initial stage and is of course expected to produce effects other than prevention of shattering of the instrument panel.

## Claims

1. An airbag apparatus (100) comprising:
an airbag (15) that is inflated and deployed to restrain an occupant;
an inflator (26) that supplies inflation gas to the airbag (15); and
a fabric housing (10) that houses the airbag (15) and the inflator (26),
wherein the housing has a housing area (12) which has a first opening edge (12a) and a second opening edge (12b) facing the first opening edge (12a) and in which the air bag (15) that has been folded and the inflator (26) are housed; a first flap (16) coupled to the first opening edge (12a) of the housing area (12) and extending from the first opening edge (12a) toward the second opening edge (12b) to cover the airbag (15); and a second flap (14) coupled to the second opening edge (12b) and arranged to extend from the second opening edge (12b) toward the first opening edge (12a) to overhang the first flap (16),
when inflation gas is output from the inflator (26), the first and second flaps (16 and 14) are opened to permit the airbag (15) to be inflated and deployed, **characterised in that**
the second flap (14) includes, on a side surface orthogonal to the first opening edge (12a) and the second opening edge (12b), a regulation member (18R) that regulates an amount of opening of the flap (14).

2. The airbag apparatus (100) according to claim 1, wherein the first flap (16) extends into the housing area (12) so as to cover from an upper surface to a side surface of the airbag (15) that has been folded, and an end of the first flap (16) reaches a bottom of the housing area (12).

3. The airbag apparatus (100) according to claim 1 or 2, wherein the second flap (14) overhangs the first flap (16) covering the upper surface of the airbag (15), and an end of the second flap (14) reaches the bottom of the housing area (12) to further cover the housing area (12).

4. The airbag apparatus (100) according to any one of claims 1 to 3, wherein a fragile portion that is broken when the airbag apparatus (100) is actuated is formed in a part of the second flap (14).

5. The airbag apparatus (100) according to any one of claims 1 to 4, wherein the regulation member (18R, 18L) is a regulation cloth coupled to the side surface of the second flap (14) and the opening edge of the housing area (12).

6. The airbag apparatus (100) according to claim 5, wherein the regulation cloth (18R, 18L) has a triangular shape fanning out from the second opening edge (12b) toward the first opening edge (12a).

7. The airbag apparatus (100) according to claim 6, wherein one side of the regulation cloth (18R, 18L) is fixed to the housing area (12) by sewing.

8. The airbag apparatus (100) according to any one of claims 1 to 7, wherein the airbag apparatus (100) is an occupant seat airbag apparatus installed inside an instrument panel (30),
a fragile area that is ruptured when the apparatus (100) is actuated is formed in the instrument panel (30), and
the first opening edge (12a) is positioned closer to the occupant, and the second opening edge (12b) is positioned closer to a windshield (40).

## Patentansprüche

1. Airbagvorrichtung (100), umfassend:
einen Airbag (15), der aufgeblasen und entfaltet wird, um einen Insassen zurückzuhalten;
eine Aufblasvorrichtung (26), die dem Airbag (15) Aufblasgas zuführt; und
ein Gewebegehäuse (10), das den Airbag (15) und die Aufblasvorrichtung (26) aufnimmt;
wobei das Gehäuse einen Gehäusebereich (12) aufweist, der eine erste Öffnungskante (12a) und eine zweite Öffnungskante (12b), die der ersten Öffnungskante (12a) zugewandt ist, aufweist und in dem der Airbag (15), der gefaltet wurde, und die Aufblasvorrichtung (26) untergebracht sind; eine erste Klappe (16), die mit der ersten Öffnungskante (12a) des Gehäusebereichs (12) gekoppelt ist und sich von der ersten Öffnungskante (12a) zu der zweiten Öffnungskante (12b) erstreckt, um den Airbag (15) abzudecken; und eine zweite Klappe (14), die mit der zweiten Öffnungskante (12b) gekoppelt und so angeordnet ist, dass sie sich von der zweiten Öffnungskante (12b) zu der ersten Öffnungskante (12a) erstreckt, um die erste Klappe (16) zu überhängen,
wenn Aufblasgas aus der Aufblasvorrichtung (26) ausgegeben wird, werden die erste und die zweite Klappe (16 und 14) geöffnet, um zu ermöglichen, dass der Airbag (15) aufgeblasen und entfaltet wird, **dadurch gekennzeichnet, dass**
die zweite Klappe (14), auf einer Seitenfläche orthogonal zu der ersten Öffnungskante (12a) und der zweiten Öffnungskante (12b), ein Regulierelement (18R) einschließt, das einen Öffnungsbetrag der Klappe (14) reguliert.

2. Airbagvorrichtung (100) nach Anspruch 1, wobei sich die erste Klappe (16) in den Gehäusebereich (12) erstreckt, um von einer oberen Fläche zu einer Seitenfläche des Airbags (15), der gefaltet wurde, abzudecken, und ein Ende der ersten Klappe (16) einen Boden des Gehäusebereichs (12) erreicht.

3. Airbagvorrichtung (100) nach Anspruch 1 oder 2, wobei die zweite Klappe (14) die erste Klappe (16), welche die obere Fläche des Airbags (15) abdeckt, überhängt und ein Ende der zweiten Klappe (14) den Boden des Gehäusebereichs (12) erreicht, um den Gehäusebereich (12) weiter abzudecken.

4. Airbagvorrichtung (100) nach einem der Ansprüche 1 bis 3, wobei ein zerbrechlicher Abschnitt, der gebrochen wird, wenn die Airbagvorrichtung (100) betätigt wird, in einem Teil der zweiten Klappe (14) ausgebildet ist.

5. Airbagvorrichtung (100) nach einem der Ansprüche 1 bis 4, wobei das Regulierelement (18R, 18L) ein Reguliertuch ist, das mit der Seitenfläche der zweiten Klappe (14) und der Öffnungskante des Gehäusebereichs (12) gekoppelt ist.

6. Airbagvorrichtung (100) nach Anspruch 5, wobei das Reguliertuch (18R, 18L) eine dreieckige Form besitzt, die von der zweiten Öffnungskante (12b) zu der ersten Öffnungskante (12a) hin ausfächert.

7. Airbagvorrichtung (100) nach Anspruch 6, wobei eine Seite des Reguliertuchs (18R, 18L) an dem Gehäusebereich (12) durch Nähen befestigt ist.

8. Airbagvorrichtung (100) nach einem der Ansprüche 1 bis 7, wobei die Airbagvorrichtung (100) eine Insassensitz-Airbagvorrichtung ist, die im Inneren einer Instrumententafel (30) installiert ist,
ein zerbrechlicher Bereich, der zerrissen wird, wenn der Vorrichtung (100) betätigt wird, in der Instrumententafel (30) ausgebildet ist und
die erste Öffnungskante (12a) näher an dem Insassen angeordnet ist und die zweite Öffnungskante (12b) näher an einer Windschutzscheibe (40) angeordnet ist.

## Revendications

1. Appareil de coussin de sécurité gonflable (100) comprenant :
un coussin de sécurité gonflable (15) qui est gonflé et déployé pour retenir un occupant ;
un dispositif de gonflage (26) qui fournit du gaz de gonflage au coussin de sécurité gonflable (15) ; et
un logement en tissu (10) qui abrite le coussin de sécurité gonflable (15) et le dispositif de gonflage (26), dans lequel le logement comporte une zone de logement (12) qui comporte un premier bord d'ouverture (12a) et un deuxième bord d'ouverture (12b) faisant face au premier bord d'ouverture (12a) et dans lequel le coussin de sécurité gonflable (15) qui a été plié et le dispositif de gonflage (26) sont logés ; un premier rabat (16) couplé au premier bord d'ouverture (12a) de la zone de logement (12) et s'étendant du premier bord d'ouverture (12a) vers le deuxième bord d'ouverture (12b) pour recouvrir le coussin de sécurité gonflable (15) ; et un deuxième rabat (14) couplé au deuxième bord d'ouverture (12b) et disposé pour s'étendre à partir du deuxième bord d'ouverture (12b) en direction du premier bord d'ouverture (12a) pour surplomber le premier rabat (16), lorsque le gaz de gonflage sort du dispositif de gonflage (26), les premier et deuxième rabats (14 et 16) s'ouvrent pour permettre le gonflage et le déploiement du coussin de sécurité gonflable (15), **caractérisé en ce que**
le deuxième rabat (14) inclut, sur une surface latérale orthogonale par rapport au premier bord d'ouverture (12a) et au deuxième bord d'ouverture (12b), un élément de régulation (18R) qui régule une quantité d'ouverture du rabat (14).

2. Appareil de coussin de sécurité gonflable (100) selon la revendication 1, dans lequel le premier rabat (16) s'étend dans la zone de logement (12) de manière à couvrir d'une surface supérieure à une surface latérale du coussin de sécurité gonflable (15) qui a été plié, et une extrémité du premier rabat (16) atteint un fond de la zone de logement (12).

3. Appareil de coussin de sécurité gonflable (100) selon la revendication 1 ou 2, dans lequel le deuxième rabat (14) surplombe le premier rabat (16) recouvrant la surface supérieure du coussin de sécurité gonflable (15), et une extrémité du deuxième rabat (14) atteint le fond de la zone de logement (12) pour couvrir davantage la zone de logement (12).

4. Appareil de coussin de sécurité gonflable (100) selon l'une quelconque des revendications 1 à 3, dans lequel une partie fragile qui est rompue lorsque l'appareil de coussin de sécurité gonflable (100) est actionné est formée dans une partie du deuxième rabat (14).

5. Appareil de coussin de sécurité gonflable (100) selon l'une quelconque des revendications 1 à 4, dans lequel l'élément de régulation (18R, 18L) est une toile de régulation couplée à la surface latérale du deuxième rabat (14) et au bord d'ouverture de la zone de logement (12).

6. Appareil de coussin de sécurité gonflable (100) selon la revendication 5, dans lequel la toile de régulation (18R, 18L) a une forme triangulaire s'étendant depuis le deuxième bord d'ouverture (12b) vers le premier bord d'ouverture (12a).

7. Appareil de coussin de sécurité gonflable (100) selon la revendication 6, dans lequel un côté de la toile de régulation (18R, 18L) est fixé à la zone de logement (12) par couture.

8. Appareil de coussin de sécurité gonflable (100) selon l'une quelconque des revendications 1 à 7, l'appareil de coussin de sécurité gonflable (100) étant un appareil de coussin de sécurité gonflable de siège d'occupant installé à l'intérieur d'un tableau de bord (30),
une zone fragile qui est rompue lorsque l'appareil (100) est actionné étant formée dans le tableau de bord (30), et
le premier bord d'ouverture (12a) étant positionné plus près de l'occupant, et le deuxième bord d'ouverture (12b) étant positionné plus près d'un pare-brise (40).
